# EUROPEAN PATENT SPECIFICATION

(11) **EP 3 104 217 B1**
(45) Date of publication and mention of the grant of the patent: **04.01.2023**
(21) Application number: 15194564.9
(22) Date of filing: 13.11.2015
(51) Int. Cl.: G02F 1/133, G02F 1/1333, G02F 1/1335, H04M 1/02, H04M 1/03

(54) **MOBILE DEVICE COMPRISING LIQUID CRYSTAL DISPLAY MODULE**
MOBILE VORRICHTUNG UMFASSEND FLÜSSIGKRISTALLANZEIGEMODUL
DISPOSITIF MOBILE COMPRENANT MODULE D'AFFICHAGE À CRISTAUX LIQUIDES

(30) Priority: 09.06.2015 CN 201510314002
(43) Date of publication of application: 14.12.2016
(73) Proprietor: Xiaomi Inc., Beijing 100085 (CN)
(72) Inventor: XIONG, Tao, 100085 Haidian District (CN); LI, Zhuxin, 100085 Haidian District (CN); YAN, Kesheng, 100085 Haidian District (CN)
(74) Representative: Loustalan, Paul William

(56) References cited:
- US-A1- 2010 302 481
- US-A1- 2010 315 570
- US-A1- 2013 113 733
- US-A1- 2013 114 219
- US-A1- 2014 168 864

## Description

### TECHNICAL FIELD

The present disclosure relates to the technical field of terminals and, more particularly, to a liquid crystal display module and a mobile device.

### BACKGROUND

With the increasing development of technology and science, various types of mobile devices such as smartphones and tablet computers have been integrated into daily life and work of users. According to the portable requirements to mobile devices for users without simultaneously affecting the display effect of mobile devices, the size of mobile devices are being reduced by manufacturers through various methods under the circumstance of constant screen size of mobile devices.

US 20130113733 A1 discloses a display panel and a mobile device with the same.

US20100315570A1, titled "PORTABLE COMPUTER DISPLAY STRUCTURES", describes an electronic device housing having upper and lower portions that are attached with a hinge. At least one portion of the housing may have a rear planar surface and peripheral sidewalls having edges. A display module may be mounted in the housing. The display module may have glass layers such as a color filter glass layer and a thin-film transistor substrate. The color filter glass layer may serve as the outermost glass layer in the display module. The edges of the display module may be aligned with the edges of the peripheral housing sidewalls to create the appearance of a borderless display for the electronic device. The display module may be provided with an opening that allows a camera or other electronic components to receive light. Traces may be provided on the underside of the thin-film transistor substrate to serve as signal paths for the electrical components.

US2014168864A1, titled "ELECTRONIC DEVICE WITH UNIFIED DISPLAY MOUNTING STRUCTURES", describes an electronic device that is provided with a display such as a liquid crystal display mounted in an electronic device housing. The display has display layers such as a layer of liquid crystal material, a color filter layer, a thin-film transistor layer, and polarizer layers. The display also has backlight structures and a display cover layer. Display mounting structures are formed from a metal member that also serves as a structural midplate within the electronic device housing. Plastic reflector structures such as white plastic and plastic trim structures are molded onto the midplate. The plastic reflector structures form a rectangular recess that receives the light guide plate. The midplate has bent wall portions that form a rectangular recess that receives the display layers. The trim structures define a rectangular recess that receives the display cover layer. Protruding portions with openings attach the midplate to the housing.

US2013114219A1, titled "OPTO-ELECTRONIC FRONTPLANE SUBSTRATE", describes frontplane articles are utilizing laminated glass substrates, for example, ion-exchanged glass substrates, with flexible glass and with opto-electronic devices which may be sensitive to alkali migration are described along with methods for making the articles.

US2010302481A1, titled "ABSORBING WIRE GRID POLARIZER", describes a polarizer consisting of a wire grid that includes a plurality of wires aligned in parallel. From at least one side of the wire grid, the wire grid intrinsically mainly absorbs electromagnetic energy having a polarization direction parallel to the wires and mainly transmits electromagnetic energy having a polarization direction perpendicular to the wires.

### SUMMARY OF THE INVENTION

The invention is defined by the independent claim. The present disclosure provides a mobile device comprising a liquid crystal display module in order to solve the deficiency in the related technology.

According to a first aspect of embodiments of the present disclosure, there is provided a mobile device as claimed in independent claim 1. Preferred embodiments are claimed in the dependent claims.

In the following description, although numerous features are designated as optional, e.g. by being introduced by "may" or "can", it is nevertheless acknowledged that all features comprised in the independent claims are not to be read as optional.

Optionally, the thickness of the front glass structure is not smaller than a predetermined thickness so as to make the strength of the front glass structure reach a predetermined strength.

Optionally, the front glass structure is provided with a non-active area corresponding to the display function component; wherein a protection ink layer is arranged at a place of a back of the front glass structure corresponding to the non-active area.

Optionally, the protection ink layer is formed by silk printing process.

Optionally, the front glass structure is provided with a non-active area corresponding to the display function component; wherein a display control circuit is arranged at a place of a back of the front glass structure corresponding to the non-active area.

Optionally, the display control circuit is formed by a photolithography process.

Optionally, the display function component comprises:
a front polarizer structure, wherein the front glass structure is provided with an active area corresponding to the display function component, and the front polarizer structure is formed by sputtering with vacuum coating process at a place of a back of the front glass structure corresponding to the active area.

Optionally, a back of the front glass structure is provided with a groove, whose position and standard are matched with a chip structure in the display function component so as to locate the chip structure within a receiving space formed by the groove.

The technical solutions provided by embodiments of the present disclosure may comprise the following advantageous effects:
Known from the above embodiments, the cover glass structure of the mobile device can be replaced by adjusting the front glass structure in the liquid crystal display module in the present disclosure, so as to omit adhering between the liquid crystal display module and the cover glass structure at the same time as simplifying structure of the mobile device. Therefore, there is no need to consider the matter of manufacturing tolerance caused by adhering, so as to facilitate the size reducing of the mobile device and to achieve narrow rim effect.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a structural schematic diagram of a mobile device in the related technology.
Fig. 2 is a structural schematic diagram of a mobile device according to one exemplary embodiment.
Fig. 3 is a structural schematic diagram of assembling a liquid crystal display module and middle-frame structure according to one exemplary embodiment.
Fig. 4 is a structural schematic diagram of a mobile device in the related technology.
Fig. 5 is a structural schematic diagram of a liquid crystal display module according to one exemplary embodiment.
Fig. 6 is a structural schematic diagram of a front glass structure on the liquid crystal display module according to one exemplary embodiment.
Fig. 7 is a structural schematic diagram of another mobile device according to one exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

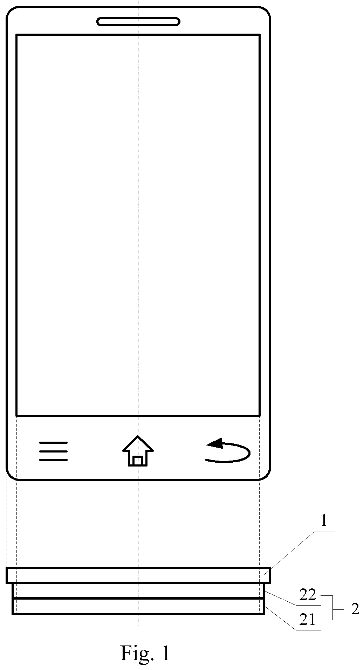

Fig. 1 is a structural schematic diagram of a mobile device in the related technology. As shown in Fig. 1, in the related technology, a cover glass structure 1 is arranged on a front surface of the mobile device (also known as a top surface), so that users can directly touch the cover glass structure 1 at the front surface of the mobile device. A liquid crystal display module (LCM) 2 is arranged on the rear (or regarded as bottom) of the cover glass structure 1, in order to achieve such functions as display and touch control of the mobile device. As shown in Fig. 1, the cover glass structure 1 is aligned with sides of the mobile device (or is slightly narrower than the sides), while the liquid crystal display module 2 is slightly broader than an active area (AA) on the mobile device based on structure, manufacturing process and other reasons.

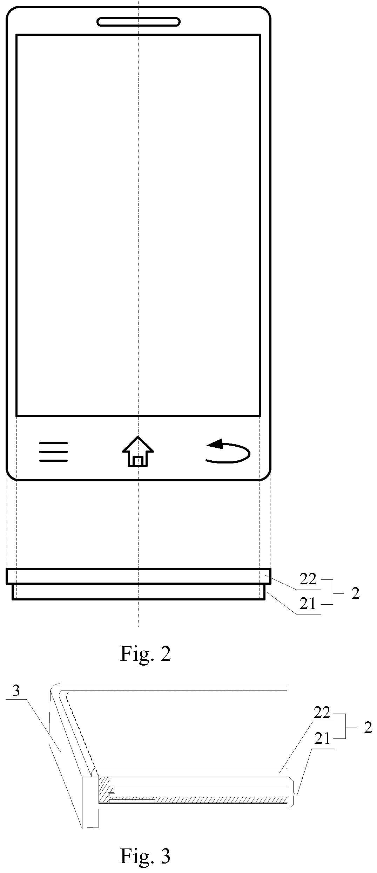

Among others, the liquid crystal display module 2 may be divided into a display function component 21 and a front glass structure 22. The front glass structure 22 is assembled into a middle-frame structure 3 (see Fig. 3) of the mobile device after the front glass structure has been adhered (directly, or probably with other structures such as a front polarizer therebetween) with the cover glass structure 1.

However, the liquid crystal display module 2 and the cover glass structure 1 are normally manufactured by different manufacturers, and then adhered and assembled by other manufacturers, which probably causes the symmetry axis of the liquid crystal display module 2 and the cover glass structure 1 to be misaligned, i.e. existing assembly tolerance. Therefore, in order to allow the assembly tolerance in the related technology, it may provide a corresponding reserved space inside the middle-frame structure 3 for considering the assembly tolerance. However, the assembly tolerance is generally up to approximately 0.3mm, which seriously affects the development trend of narrow rim, lightness and thinness of the mobile device.

Therefore, the present disclosure solves the above technical problem of the related technology by improving the structure of the liquid crystal display module 2.

Fig. 2 is a structural schematic diagram of a mobile device according to one exemplary embodiment; Fig. 3 is a structural schematic diagram of assembling a liquid crystal display module and middle-frame structure according to one exemplary embodiment. As shown in Figs. 2 and 3, the liquid crystal display module 2 comprises:
a display function component 21, located in a receiving space of the middle-frame structure 3 after the display crystal display module 2 and the middle-frame structure 3 of the mobile device have been assembled; and
a front glass structure 22, fixedly arranged above the display function component 21, wherein the dimensions (or standard) of the front glass structure 22 are matched with the middle-frame structure 3 so that a cover glass structure of the mobile device is formed by the front glass structure 22 after the liquid crystal display module 2 and the middle-frame structure 3 of the mobile device have been assembled.

In the present embodiment, with improving the structure of the liquid crystal display module 2, i.e. matching the dimensions (standard) of the front glass structure 22 with the middle-frame structure 3, the cover glass structure 1 of Fig. 1 is replaced by the front glass structure 22, thereby achieving the relevant functions. By replacing the cover glass structure 1 with the front glass structure 22, a step of adhering between the liquid crystal display module 2 and the cover glass structure 1 may be omitted in the assembly process of the mobile device, which is helpful to simplify the assembly procedure of the mobile device, and also can avoid manufacturing tolerance caused by adhering between the liquid crystal display module 2 and the cover glass structure 1. Further, there is no need to provide a reserved space for receiving the manufacturing tolerance, which is helpful to achieve development of a narrow rim structure, lightness and thinness of the mobile device.

### 1. Adhering assembly

The liquid crystal display module 2 may be fixedly connected with the middle-frame structure 3 in an adhering way. According to the invention covered by the subject-matter of the claims and as shown in Fig. 3, the middle-frame structure 3 comprises a side rim constituting sides of the mobile device, so that edges of the front glass structure 22 are adhered with the middle-frame structure 3 at the side rim. Of course, the above way is only used for example explanation, and in exemplary embodiments not covered by the subject-matter of the claims other ways such as adhering between the display function component 21 and an inside wall of side rim of the middle-frame structure 3 may obviously be adopted. Similarly, the adhering ways between the cover glass structure 1 and the middle-frame structure 3, or between the liquid crystal display module 2 and the middle-frame structure 3 in the related technology may be applied to the adhering operation between the liquid crystal display module 2 and the middle-frame structure 3, which is not limited in the present disclosure.

### 2. Bottom groove

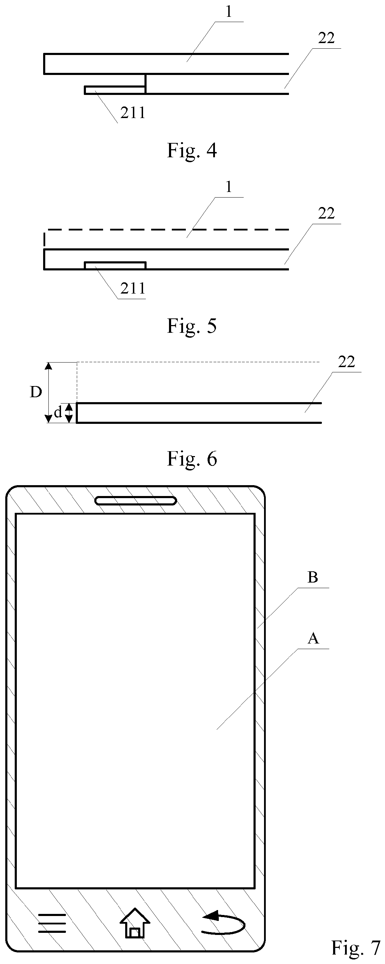

Fig. 4 is a structural schematic diagram of a mobile device in the related technology. As shown in Fig. 4, the dimensions of the front glass structure 22 in the related technology is smaller than the cover glass structure 1, so the front glass structure 22 and a chip structure 211 of the display function component 21 are adjacently arranged, while the chip structure 211 is positioned at the space surrounded between bottom of the cover glass structure 1 and left-side wall of the front glass structure 22, like that in Fig. 4.

After the dimensions of the front glass structure 22 are changed to replace the cover glass, the original space for positioning the chip structure 211 is occupied by the front glass structure 22. Therefore, as shown in Fig. 5, a back of the front glass structure 22 is provided with a groove, whose position and dimensions are matched with a chip structure 211, so as to locate the chip structure 211 within a receiving space formed by the groove. In the embodiment, the chip structure 211 may be arranged at the same position as that in the related technology by arranging the groove at a back of the chip structure 211. It will not occupy other spaces inside the mobile device, which facilitates internal space planning and utilizing of the mobile device and helps to achieve designs having a narrow rim structure, lightness and thinness of the mobile device.

### 3. Thickness increasing

In the related technology, the front glass structure 22 and the cover glass structure 1 are both arranged inside the mobile device. Further, high strength requirements such as drop-resisting, wear-resisting are satisfied by the cover glass structure 1. However in order to help the lightness and thinness design of the mobile device, the thickness of the front glass structure 22 may be reduced as much as possible, so that the thickness of the front glass structure 22 is merely about 0.15mm.

In the present embodiment, due to removing of the cover glass structure 1 (or the front glass structure 22 performing the function of the original cover glass structure 1), the shock initially exerted on the cover glass structure 1 needs to be resisted by the front glass structure 22, thereby the thickness of the front glass structure 22 may be increased so as not to be smaller than a predetermined thickness. For example, as shown in Fig. 6, the thickness of the front glass structure 22 may be increased from the original d to D, so that strength of the front glass structure 22 could reach the predetermined strength.

Moreover, with respect to the active area corresponding to the display function component 21, a front polarizer structure (not shown in the figures) in the display function component 21 is formed by sputtering with vacuum coating process at a place of a back surface of the front glass structure corresponding to the active area. As the front polarizer structure may be adhered between the front glass structure 22 and the cover glass structure 1 in the related technology, matters such as scratching the front polarizer structure during the usage of the mobile device may be avoided by forming the front polarizer structure to a back of the front glass structure 22 under condition of removing the cover glass structure 1, thereby it is helpful to extend service life of the liquid crystal display module 2.

Simultaneously, as optical properties such as transmittance may be changed after the thickness of the front glass structure 22 has been increased, the optical properties may be improved to obtain better lighting effects after the front glass structure 22 has been processed by vacuum coating process discussed above. Of course, except from forming the front polarizer structure by sputtering, the front glass structure 22 may be further processed with vacuum coating process to obtain final desired optical property.

### 4. Other processes

As shown in Fig. 7, area A is the active area of the mobile device; while area B outside the area A is the non-active area.

As one exemplary embodiment, a protection ink layer (not shown in the figures) is arranged at a place of a back of the front glass structure 22 corresponding to the non-active area, thereby avoiding users directly observing the inner structure of the mobile device from relevant areas. Wherein, the protection ink layer may be formed by silk printing process.

As another exemplary embodiment, a display control circuit (not shown in the figures) is arranged at a place of a back of the front glass structure 22 corresponding to the non-active area, thereby transferring touch signals and others collected by the liquid crystal display module 2. Wherein, the display control circuit is formed by photolithography process.

Of course, in an embodiment of the present disclosure, the front glass structure 22 may comprise both protection ink layer and display control circuit discussed above.

The present disclosure also provides a mobile device, including any one of the liquid crystal display modules 2 in the above embodiments.

## Claims

1. A mobile device comprising a liquid crystal display module (2) and a middle-frame structure (3) comprising a side rim that constitutes the sides of the mobile device, the liquid crystal display module (2) comprising:
a display function component (21), locatable in a receiving space of the middle-frame structure (3) of a mobile device; and
a front glass structure (22) adhered to the middle-frame structure (3), fixedly arranged directly upon the display function component (21);
wherein the front glass structure (22) is sized such that the dimensions of the front glass structure (22) are matched with the middle frame structure (3) and such that edges of the front glass structure (22) are directly adhered upon the top surface of the side rim of the middle-frame structure (3) so that a cover glass structure of the mobile device is formed by the front glass structure (22).

2. The mobile device according to claim 1, wherein the front glass structure (22) is provided with a non-active area (B) corresponding to the display function component (21); wherein a protection ink layer is arranged at a place of a back of the front glass structure (22) corresponding to the non-active area (B).

3. The mobile device according to claim 2, wherein the protection ink layer is formed by a silk printing process.

4. The mobile device according to claim 2 or 3, wherein a display control circuit is arranged at a place of the back of the front glass structure (22) corresponding to the non-active area (B).

5. The mobile device according to claim 4, wherein the display control circuit is formed by a photolithography process.

6. The mobile device according to any of the preceding claims, wherein the display function component (21) comprises:
a front polarizer structure, wherein the front glass structure (22) is provided with an active area (A) corresponding to the display function component (21), and the front polarizer structure is formed by sputtering with vacuum coating process at a place of the back of the front glass structure (22) corresponding to the active area (A).

7. The mobile device according to any of the preceding claims, wherein the back of the front glass structure (22) is provided with a groove, whose position and dimensions are matched with a chip structure (211) in the display function component (21) so as to locate the chip structure (211) within a receiving space formed by the groove.

## Patentansprüche

1. Mobilvorrichtung, die ein Flüssigkristallanzeigemodul (2) und ein mittleres Rahmengebilde (3), das einen Seitenrandrahmen aufweist, der die Seiten der Mobilvorrichtung bildet, aufweist, wobei das Flüssigkristallanzeigemodul (2) Folgendes aufweist:
ein Anzeigefunktionsteil (21), das in einem Aufnahmeraum des mittleren Rahmengebildes (3) einer Mobilvorrichtung positionierbar ist; und
ein an dem mittleren Rahmengebilde (3) haftendes Frontglasgebilde (22), das direkt auf dem Anzeigefunktionsteil (21) fest angeordnet ist;
wobei das Frontglasgebilde (22) eine solche Größe hat, dass die Abmessungen des Frontglasgebildes (22) mit dem mittleren Rahmengebilde (3) übereinstimmen und dass Ränder des Frontglasgebildes (22) direkt auf der Oberseite des Seitenrands des mittleren Rahmengebildes (3) haften, so dass von dem Frontglasgebilde (22) ein Abdeckglasgebilde der Mobilvorrichtung gebildet wird.

2. Mobilvorrichtung nach Anspruch 1, wobei das Frontglasgebilde (22) mit einem nichtaktiven Bereich (B) versehen ist, der dem Anzeigefunktionsteil (21) entspricht; wobei eine Schutzfarbenschicht an einer Stelle einer Rückseite des Frontglasgebildes (22) angeordnet ist, die dem nichtaktiven Bereich (B) entspricht.

3. Mobilvorrichtung nach Anspruch 2, wobei die Schutzfarbenschicht durch ein Siebdruckverfahren hergestellt ist.

4. Mobilvorrichtung nach Anspruch 2 oder 3, wobei eine Anzeigesteuerschaltung an einer Stelle der Rückseite des Frontglasgebildes (22) angeordnet ist, die dem nichtaktiven Bereich (B) entspricht.

5. Mobilvorrichtung nach Anspruch 4, wobei die Anzeigesteuerschaltung durch ein Fotolitografieverfahren hergestellt ist.

6. Mobilvorrichtung nach einem der vorhergehenden Ansprüche, wobei das Anzeigefunktionsteil (21) Folgendes aufweist:
ein vorderes Polarisatorgebilde, wobei das Frontglasgebilde (22) mit einem aktiven Bereich (A) versehen ist, der dem Anzeigefunktionsteil (21) entspricht, und das vordere Polarisatorgebilde durch Sputtern mit einem Vakuumbeschichtungsverfahren an einer Stelle der Rückseite des Frontglasgebildes (22) hergestellt ist, die dem aktiven Bereich (A) entspricht.

7. Mobilvorrichtung nach einem der vorhergehenden Ansprüche, wobei die Rückseite des Frontglasgebildes (22) mit einer Ausnehmung versehen ist, deren Position und Abmessungen mit einer Chip-Struktur (211) im Anzeigefunktionsteil (21) übereinstimmen, um die Chip-Struktur (211) innerhalb eines von der Ausnehmung gebildeten Aufnahmeraums zu positionieren.

## Revendications

1. Dispositif mobile comprenant un module d'affichage à cristaux liquides (2) et une structure de cadre central (3) comprenant une bordure latérale qui constitue les côtés du dispositif mobile, le module d'affichage à cristaux liquides (2) comprenant :
un composant à fonction d'affichage (21), pouvant être situé dans un espace de réception de la structure de cadre central (3) d'un dispositif mobile ; et
une structure frontale en verre (22) adhérée à la structure de cadre central (3), arrangée de manière fixe directement sur le composant à fonction d'affichage (21) ;
dans lequel la structure frontale en verre (22) est dimensionnée de telle sorte que les dimensions de la structure frontale en verre (22) correspondent à la structure de cadre central (3) et de telle sorte que les bords de la structure frontale en verre (22) sont adhérés directement sur la surface supérieure de la bordure latérale de la structure de cadre central (3) de manière telle qu'une structure de recouvrement en verre du dispositif mobile est formée par la structure frontale en verre (22).

2. Dispositif mobile selon la revendication 1, dans lequel la structure frontale en verre (22) est pourvue d'une zone non active (B) correspondant au composant à fonction d'affichage (21) ; dans lequel une couche d'encre de protection est arrangée à un endroit d'un dos de la structure frontale en verre (22) correspondant à la zone non active (B).

3. Dispositif mobile selon la revendication 2, dans lequel la couche d'encre de protection est formée par un procédé sérigraphique.

4. Dispositif mobile selon la revendication 2 ou 3, dans lequel un circuit de commande d'affichage est arrangé à un endroit du dos de la structure frontale en verre (22) correspondant à la zone non active (B).

5. Dispositif mobile selon la revendication 4, dans lequel le circuit de commande d'affichage est formé par un procédé photolithographique.

6. Dispositif mobile selon l'une quelconque des revendications précédentes, dans lequel le composant à fonction d'affichage (21) comprend :
une structure frontale de polarisation, dans lequel la structure frontale en verre (22) est pourvue d'une zone active (A) correspondant au composant à fonction d'affichage (21), et la structure frontale de polarisation est formée par pulvérisation par un procédé de dépôt sous vide à un endroit du dos de la structure frontale en verre (22) correspondant à la zone active (A).

7. Dispositif mobile selon l'une quelconque des revendications précédentes, dans lequel le dos de la structure frontale en verre (22) est pourvu d'une rainure, dont la position et les dimensions correspondent à une structure de puce (211) dans le composant à fonction d'affichage (21) de manière à situer la structure de puce (211) dans un espace de réception formé par la rainure.
